# EUROPEAN PATENT SPECIFICATION

(11) **EP 1 484 856 B1**
(45) Date of publication and mention of the grant of the patent: **15.10.2008**
(21) Application number: 03743784.5
(22) Date of filing: 30.01.2003
(51) Int. Cl.: H04L 29/06, H04L 12/28, H04Q 7/38

(54) **METHOD FOR DISTRIBUTING ENCRYPTION KEYS IN WIRELESS LAN**
VERFAHREN ZUR VERTEILUNG VON VERSCHLÜSSELUNGSSCHLÜSSELN IN EINEM DRAHTLOSEN LAN
PROCEDE DE DISTRIBUTION DE CLES DE CHIFFRAGE DANS UN RESEAU LAN SANS FIL

(30) Priority: 08.03.2002 CN 02110974
(43) Date of publication of application: 08.12.2004
(73) Proprietor: Huawei Technologies Co., Ltd., Nanshan District, Shenzhen 518057 (CN)
(72) Inventor: LI, Yongmao, Huawei Service Centre Building, Shenzhen, Guangdong 518057 (CN); WU, Gengshi, Huawei Service Centre Building, Shenzhen, Guangdong 518057 (CN)
(74) Representative: Epping - Hermann - Fischer
(86) International application number: PCT/CN2003/000106
(87) International publication number: WO 2003/077467

(56) References cited:
- EP-A1- 0 658 021
- WO-A-99/56434
- CN-A- 1 264 521
- JP-A- 2001 244 874
- US-B1- 6 453 159
- YOUNG KIM: "802.11b Wireless LAN Authentication, Encryption, and Security" ., 31 May 2001 (2001-05-31), pages 1-16, XP002250118
- FRANCK LE STEFANO M FACCIN NOKIA RESEARCH CENTER: "Key distribution mechanisms for Mobile IPv6; draft-le-mobileip-keydistribution-00.txt;" IETF STANDARD-WORKING-DRAFT, INTERNET ENGINEERING TASK FORCE, IETF, CH, 23 February 2001 (2001-02-23), XP015031564 ISSN: 0000-0004
- PATENT ABSTRACTS OF JAPAN vol. 2000, no. 21, 3 August 2001 (2001-08-03) & JP 2001 111543 A (NEC CORP), 20 April 2001 (2001-04-20) & US 7 024 553 B1 (MORIMOTO SHINICHI) 4 April 2006 (2006-04-04)
- BLUMENTHAL U ET AL: "A SCHEME FOR AUTHENTICATION AND DYNAMIC KEY EXCHANGE IN WIRELESS NETWORKS" BELL LABS TECHNOLOGY, BELL LABORATORIES, MURREY HILL, NJ, US, vol. 2, no. 7, 2002, pages 37-48, XP001141703 ISSN: 1089-7089

## Description

### Field of the Invention

The present invention relates to communication between APs (Access Point) in WLAN (Wireless Local Area Network) and any mobile host, particularly to a method for distributing encryption keys.

### Background of the Invention

WLAN transfers data, voice, and video signals through wireless channels. Compared with traditional networks, WLAN is easy to install, flexible to use, economical, and easy to extend, etc., and is favored by more and more users.

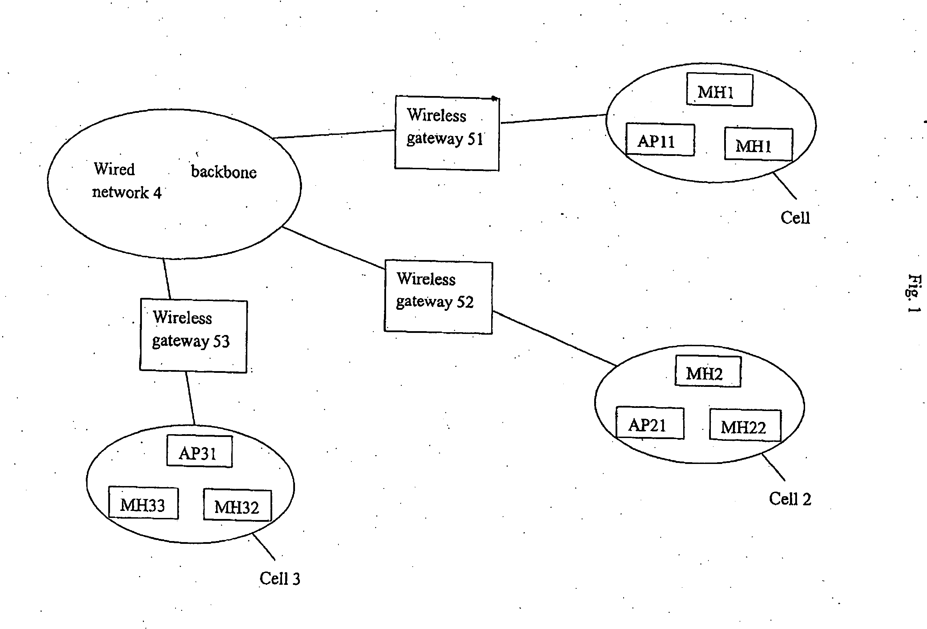

The coverage area of WLAN is called as service area, which is usually divided into Basic Service Area (hereinafter referred as BSA) and Extended Service Area (hereinafter referred as ESA); wherein BSA refers to the communication coverage area determined by transceivers of individual units in the WLAN and the geographic environment and is usually called as cell, the scope of which is generally small; the method shown in Fig.1 is usually used to extend the coverage area of WLAN, i.e., the BSA is connected to the backbone network (usually a wired LAN) via the APs and the wireless gateway, so that mobile hosts (MHs) in the BSA are connected to the backbone network via the APs and the wireless gateway to constitute a ESA.

Compared with wire transmission, the confidentiality of wireless transmission is lower; therefore, to ensure communication security between the APs of the cell and the mobile hosts, information should be encrypted with keys before transmitted. When a mobile host moves across cells or powers on, it searches for the local cell, registers itself to the AP of the cell, and obtains information related with the cell; therefore, the encryption communication between the mobile host and the APs will be restricted to some extent. In detail, for example, when the mobile host MH12 moves from cell 1 into cell 2, if AP11 and AP12 is in the coverage area of the same key management server, then the encryption communication between mobile host MH12 and AP11 can be smoothly transited to between MH12 and AP21; however, if AP11 and AP21 are managed by different key management servers, then encryption communication between MH12 and AP21 can not be realized directly in cell 2 because AP21 can not obtain the communication key of MH12. However, if the mobile host MH12 sends its key to AP21 through the wireless channel without encryption, the system will be vulnerable because the key may be intercepted and deciphered easily.

As described above, it is obvious that the method for distributing encryption keys in the prior art will result in restrictions to encryption communication when the mobile host roams across cells.

The article "802.11b Wireless LAN Authentication, Encryption, and Security" by Young Kim analyzes the drawbacks of the encryption mechanisms for WLAN in the prior art and introduces a method for enabling dynamical distribution of encryption keys by introducing IEEE 802.1x so as to improve system security. An authentication server generates session keys during Transport Layer Security (TLS) negotiation. The authentication server communicates the keys to an authenticator and to a supplicant (via the authenticator) during the TLS transaction. Both the access point and the end-station are now aware of the session keys. The authenticator uses the session keys to create a dynamic Wired Equivalent Privacy (WEP) key. The authenticator encrypts the WEP key using the session key and communicates it to the supplicant via the EAPOL_KEY message.

The Internet-Draft of the Mobile IP working group titled "Key distribution mechanisms for mobile IPv6" by Frank Le and Stefano M. Faccin describes two methods for generating a key: one was based on a random number and the other was based on Diffie Hellman mechanism, and how these two methods can be applied to a Mobile IP network.

WO 99/56434 A1 proposes a method for user authentication in telecommunications networks.

### Summary of the Invention

The present invention provides a new method for distributing encryption keys in WLAN.

In a method for distributing encryption keys in WLAN according to the present invention, said WLAN comprises an AP and a plurality of mobile hosts storing identification information, said mobile hosts communicate with said AP through wireless channels, said AP and an external network connect with the authentication device which authenticates said mobile hosts; said authentication device stores identification information of all mobile hosts, said method comprises the following steps:
(1) a mobile host sending an authentication request containing identification information to the authentication device for identity authentication; (2) the authentication device authenticating the mobile host according to identification information contained in the authentication request, if the authentication fails, the authentication device sending an ACCEPT_REJECT message to the mobile host via the AP; if the authentication succeeds, the authentication device sending key-related information M1, comprising corresponding property information searched by said authentication device according to the identification information contained in the authentication request, or a key generated from said corresponding property information by said authentication device with a key generation algorithm, to the AP and sending an ACCESS_ACCEPT message to the mobile host via the AP;
(3) AP obtaining a key, usable for decryption in data packets communication between the mobile host and the AP, from the key-related information M1 sent from the authentication device, and the mobile host obtaining the key upon receipt of said ACCESS_ACCEPT message by generating a key from the stored corresponding property information or by detecting an encrypted key sent from the authentication device or the access point using said property information, with the encrypted key being encrypted with said property information.
As shown above, the method of the present invention combines key distribution process with authentication process of the mobile hosts and utilizes an authentication device to manage key distribution, so that mobile hosts can roam in a scope larger than the coverage area of the key management server. Because the key distribution doesn't involve transmitting the key which is not encrypted via the air interface, the method ensures the key is safe. In addition, said method doesn't depend on specific authentication modes, so it can be used under different kinds of WLAN protocols. Finally, because AP doesn't need to manage user information, the method simplifies AP structure, and thus lowers the cost.

### Brief Description of the Drawings

Various advantages, characteristics, and features of the present invention can be understood better through description of the embodiments hereunder with reference to the attached drawings, wherein:
Fig.1 is a schematic diagram of connection between a WLAN and a wired backbone network via the AP and a wireless gateway;
Fig.2a is a schematic diagram of the encryption communication method in WLAN according to an embodiment of the present invention;
Fig.2b is a schematic diagram of the encryption communication method in WLAN according to another embodiment of the present invention;
Fig.2c is a schematic diagram of the encryption communication method in WLAN according to another embodiment of the present invention;
Fig.2d is a schematic diagram of the encryption communication method in WLAN according to another embodiment of the present invention;
Fig.3a shows an example of the dynamic negotiation process for the keys in WLAN;
Fig.3b shows another example of the dynamic negotiation process for the keys in WLAN;
Fig.3c shows another example of the dynamic negotiation process for the keys in WLAN; and
Fig.3d shows another example of the dynamic negotiation process for the keys in WLAN.

### Detailed Description of the Embodiments

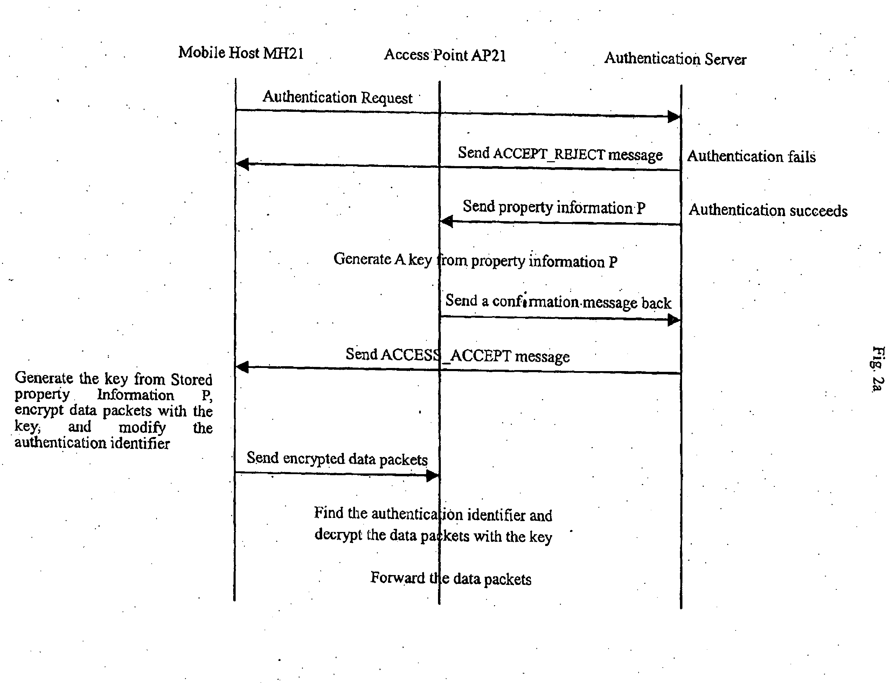

Hereunder the method for distributing encryption keys in WLAN according to the embodiments of the present invention is described in detail with reference to Fig.1 and Fig.2a to 2d.

As shown in Fig.1, cell 1 to 3 include AP11, AP21 and AP31, and several mobile hosts MH12 to MH33 respectively, each of the mobile hosts stores identity information I and property information P and communicates with the AP in the corresponding cell through a wireless channel; the APs are connected to a wired backbone network 4 via wireless gateways 51 to 53; the authentication server (not shown) in the backbone network contains identity information I and property information P of all mobile hosts in all cells, and it can also obtain user lists storing identity information I and property information P of mobile hosts from external devices; therefore the authentication server can authenticate any mobile host according to the identity information I or the identity information I stored in the user lists. It should be noted that the identity information I and the property information P of mobile hosts can also be managed by wireless gateways 51 to 53, therefore the mobile hosts can be authenticated by the wireless gateways. In addition, the mobile hosts can also be authenticated by the authentication server and the wireless gateways interoperably. For those skilled in the art, authentication of mobile hosts is the prior art and can be implemented in various ways, and said methods are only a part of them; for convenience, any device which can authenticate the mobile hosts will be considered as an authentication device.

Fig.2a shows the initial key distribution and the encryption communication between mobile host MH12 and AP21 when MH12 moves into cell 2 from cell 1.

The mobile host MH12 establishes a connection with AP21 and sends an authentication request containing identity information to the authentication server in the backbone network 4 for authentication via AP21 and the wireless gateway 51. When receiving the authentication request, the authentication server authenticates the mobile host according to the identity information I contained in the authentication request; if the identity information I is inconsistent with the stored one, the authentication server deems the mobile host as an illegal one and rejects the authentication request, and then sends an ACCEPT_REJECT message to MH11 via the wireless gateway 51 and AP21; if the identity information I contained in the authentication request is consistent with the stored one, the authentication server deems the mobile host as a legal one and accepts the authentication request, and then, as shown in Fig.2a, the authentication server searches for the corresponding property information P of the mobile host MH12 according to the identity information I and then sends it to AP21 via the wireless gateway 51. When receiving the property information P sent from the authentication server, AP21 sends a confirmation message back to the authentication server via the wireless gateway for safe receipt of the property information P and generates a key from the property information P with the key generation algorithm. The key generation algorithm can be any kind of algorithm, and the length of the key is free. When receiving the confirmation message from AP21, the authentication server sends an ACCESS_ACCEPT message to MH21 via the wireless gateway 51 and AP21. When receiving the ACCESS_ACCEPT message, the mobile host MH21 generates a key from the property information P stored in itself with the same key generation algorithm as the one with which AP21 generates a key, and then encrypts data packets to be sent to AP21 with the key, and sends the encrypted data packets to AP21; MH21 adds an encryption identifier in the data packets when encrypting the data packets. When receiving the data packets from MH21, AP21 detects the encryption identifier in the data packets; if the encryption identifier is found, AP21 decrypts the data packets with the key obtained from property information P and the key generation algorithm, and then forwards the decrypted data packets to the external network 4 via the wireless gateway 51; otherwise AP21 directly forwards the original data packets to the external network 4 via the wireless gateway 51.

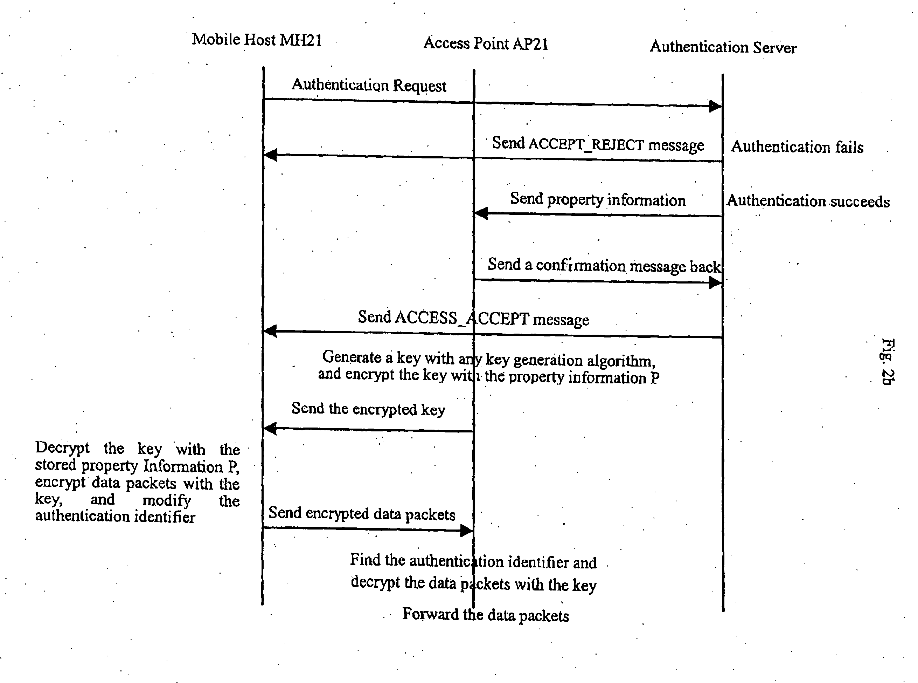

Fig.2b is a schematic diagram of the encryption communication method in WLAN according to another embodiment of the present invention. The difference between this embodiment and that of Fig.2a is: in the communication process, the key is generated with any key generation algorithm and then encrypted with property information P by AP21, and then sent to MH21. When receiving the key from AP21, MH21 decrypts the key with the property information P stored in itself, encrypts the data packets to be sent to AP with the decrypted key and sends them to AP. MH21 also adds an encryption identifier in the data packets when encrypting the data packets. In this case, each of the mobile hosts does not need to know the key generation algorithm used by AP21.

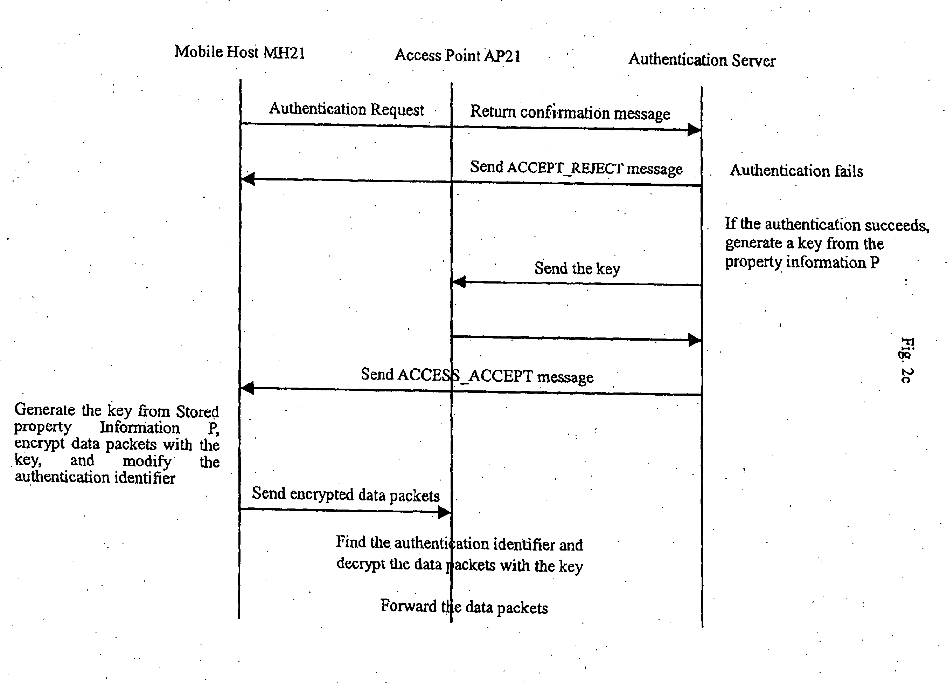

Fig.2c is a schematic diagram of the encryption communication method in WLAN according to another embodiment of the present invention. The difference between this embodiment and that of Fig.2a is: when the authentication succeeds, the authentication server generates the key from the found property information P with the key generation algorithm and then sends the key to AP21 instead of sending the property information P to AP21 to generate the key.

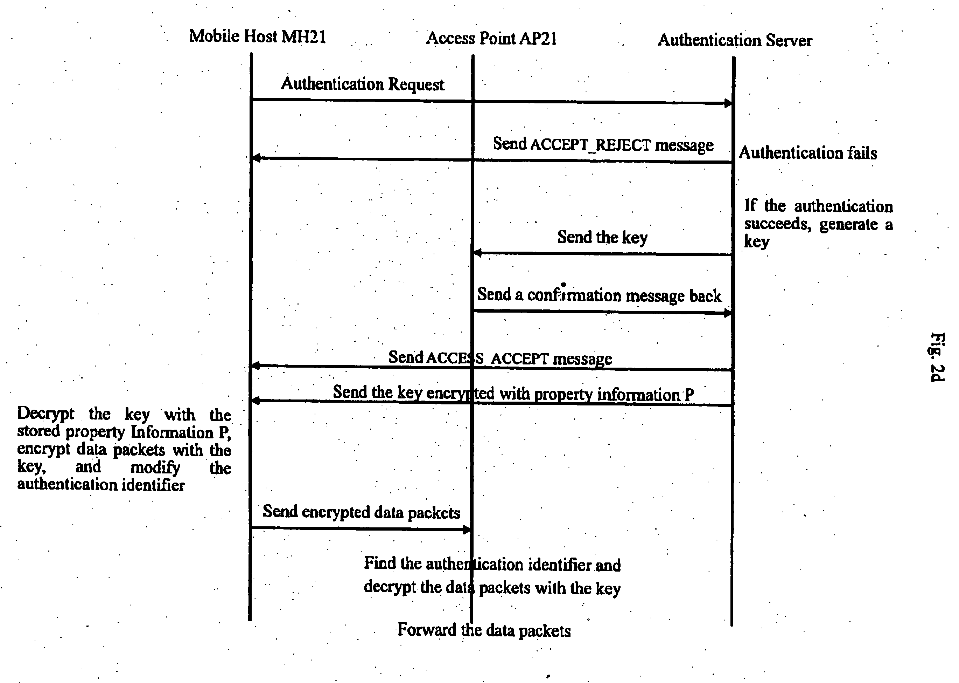

Fig.2d is a schematic diagram of the encryption communication method in WLAN according to another embodiment of the present invention. The difference between this embodiment and that of Fig.2c is: when the authentication succeeds, the authentication server generates the key with the key generation algorithm and then sends the key to AP21, and at the same time, the authentication server also sends the key encrypted with the property information P to MH21.

It should be noted that the backbone network 4 may includes a plurality of authentication servers, which connect with each other under certain communication protocols to exchange identification information of the mobile hosts stored in them; so that the service area can be extended further.

In above embodiments, if the mobile hosts are authenticated by the wireless gateway 51 to 53 independently, other functions of authentication server can also be implemented on the wireless gateways, for example, wireless gateways 51 to 53 can be configured to send ACCESS_ACCEPT message to MH21, generate the key, and send property information P to AP21, etc. Similarly, if the confirmation function is implemented by the authentication server and the wireless gateways interoperably, other functions of the authentication server can also be implemented by the authentication server and the wireless gateways interoperably. In general, all functions of the authentication server can be implemented by the authentication device.

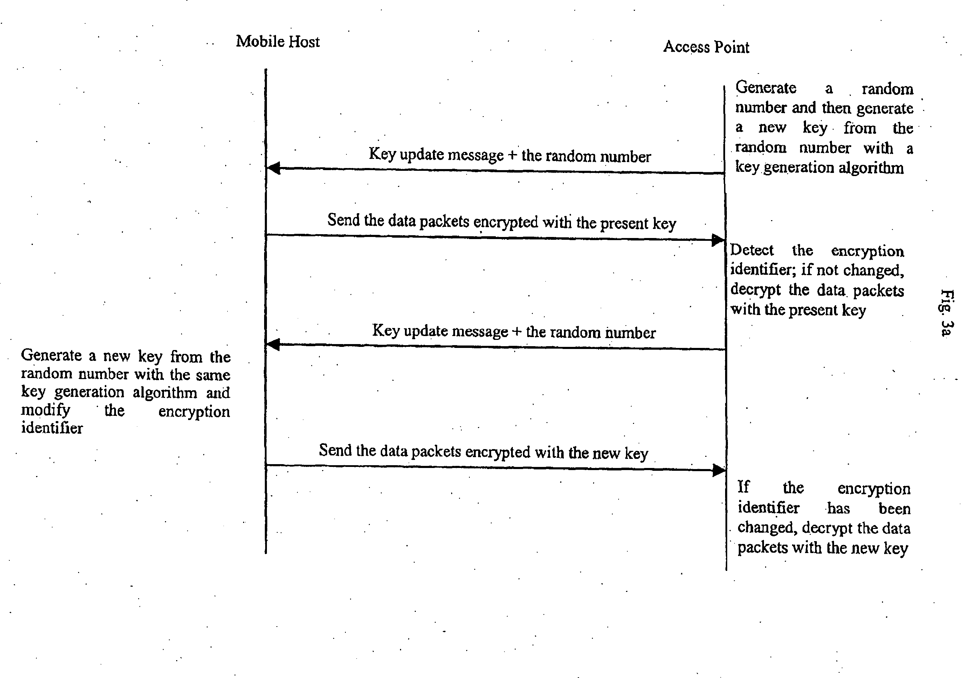

In above encryption communication in the WLAN, to enhance system security further, the communication key between AP and the mobile host can also be updated periodically or aperiodically. Hereunder several examples of such dynamic negotiation for keys are described with reference to Fig.3a to 3d.

As shown in Fig.3a, in order to update the key, AP generates a random number first and generates a key from the random number with any key generation algorithm; then AP adds the random number in the key update message and then sends the message to the mobile host. When receiving the key update message, the mobile host generates the key from the random number contained in the key update message with the same key generation algorithm, encrypts the data packets to be sent to AP with the key, and then sends the data packets to AP; when encrypting the data packets, the mobile host still adds the encryption identifier in the data packets and changes the value of the encryption identifier to indicate the communication key has been changed.

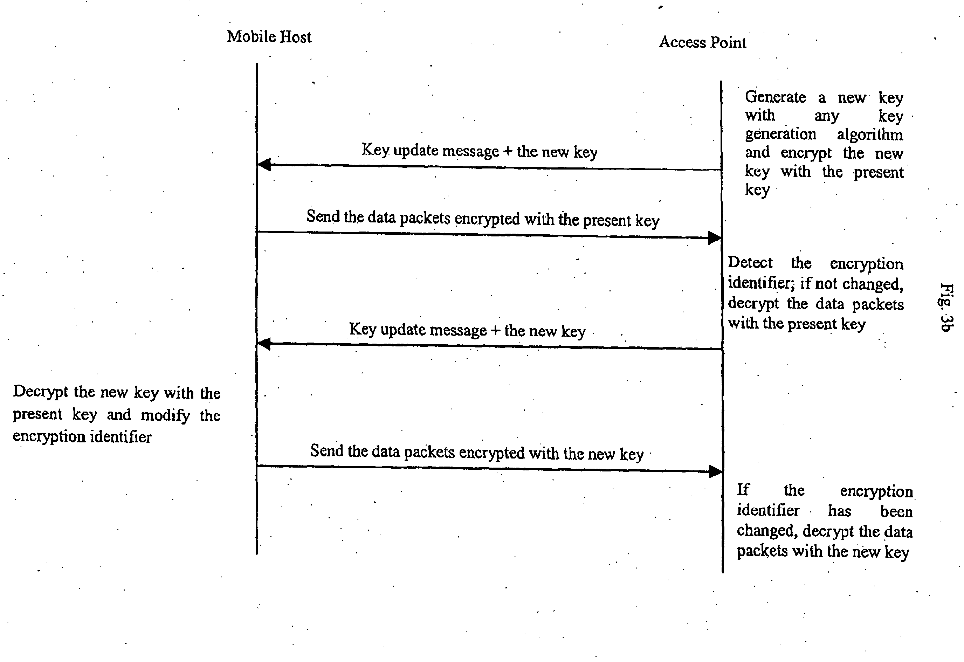

Fig.3b shows another example of dynamic negotiation for the keys. As shown in Fig.3b, in order to update the key, AP generates a new key in a random way, encrypts the newly generated key with the present key, and adds the encrypted key to the key update message, and then sends the message to the mobile host. When receiving the key update message, the mobile host decrypts the new key contained in the key update message with the present key, encrypts the data packets to be sent to AP with the new key, and then sends the encrypted data packets to AP; when encrypting the data packets, the mobile host also adds the encryption identifier to the data packets and change the value of the encryption identifier to indicate the communication key has been changed

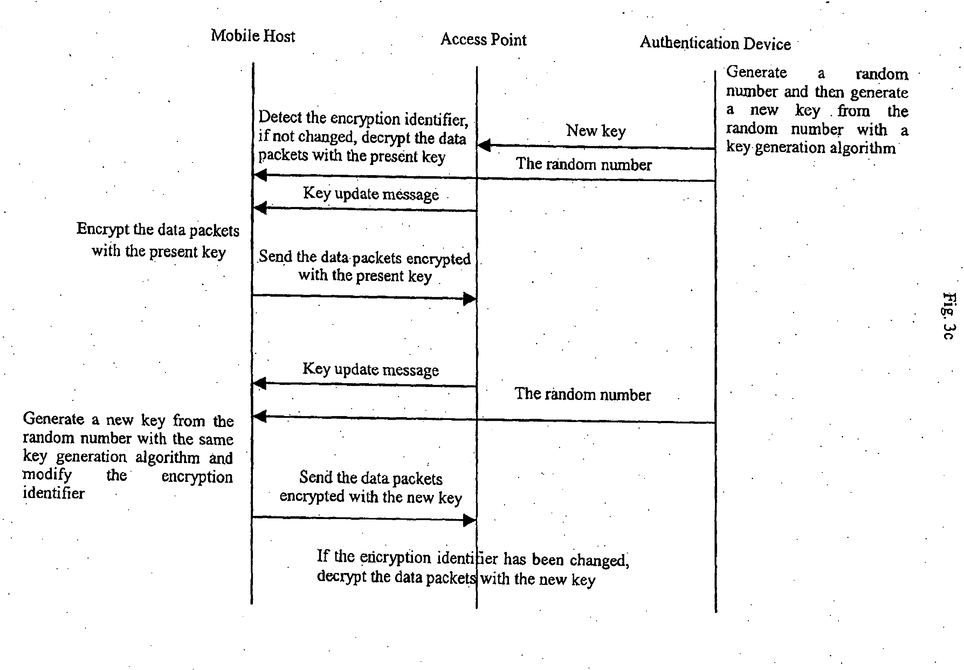

Fig.3c shows another sample of the dynamic negotiation for the keys. As shown in Fig.3c, in order to update the key, the authentication device generates a random number, generates a key from the random number with any key generation algorithm, and sends the random number to the mobile host and sends the generated key to AP. When receiving the key from the authentication device, AP sends a key update message to the mobile host. When receiving the key update message and the random number, the mobile host generates the key with the same key generation algorithm, encrypts the data packets to be sent to AP with the key, and then sends the encrypted data packets to AP; when encrypting the data packets, the mobile host also adds the encryption identifier to the data packets and change the value of the encryption identifier to indicate the communication key has been changed.

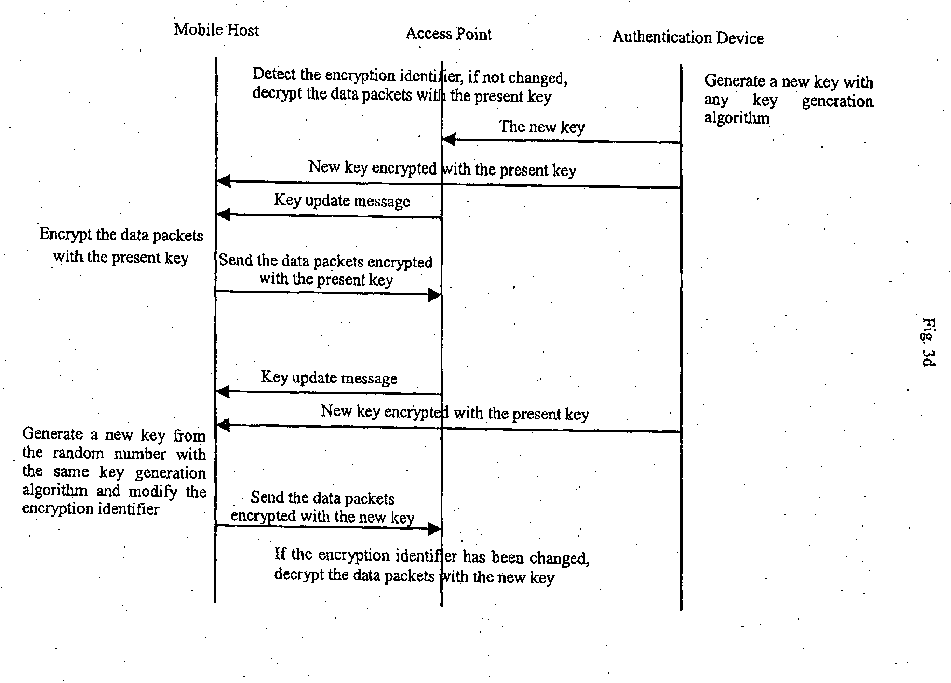

Fig.3d shows another sample of dynamic negotiation for the keys. As shown in Fig.3d, in order to update the key, the authentication device generates a new key in a random way, sends the key to AP, then encrypts the new key with the present key, and sends the encrypted key to the mobile host. When receiving the unencrypted key from the authentication device, AP sends a key update message to the mobile host. When receiving the key update message and the encrypted key, the mobile host decrypts the encrypted key with the present key to obtain a new key, encrypts the data packets to be sent to AP with the new key, and then sends the encrypted data packets to AP; when encrypting the data packets, the mobile host also adds the encryption identifier in the data packets and change the value of the encryption identifier to indicate the communication key has been changed.

In above dynamic negotiation process, if AP finds the value of encryption identifier in the data packets sent from the mobile host is not changed after the key update message is sent, it will resend the key update message and the random number or encrypted new key, till the mobile host communicates with the new key.

As shown above, the key distributing method does not involve logon management, authentication management, and mobile management in WLAN; therefore it can be implemented under all different kinds of WLAN protocols, including PPPoE, IEEE 802.1x, etc. To better understanding the advantages, characteristics and object of the present invention, the key distributing method in the embodiment of the present invention will now be described with reference to IEEE 802.1x.

IEEE 802.1x is a commonly-used WLAN protocol, involving standards of MAC layer and physical layer, wherein the unit of data packets between AP and mobile hosts is MAC frame. IEEE 802.1x messages mainly include: EAP_START, EAP_LOGOOF, EAP_REQUEST, EAP_RESPONSE, EAP_SUCCESS, EAP_FAIL and EAP_KEY, which are special MAC frames because they are identified by the Type field in MAC frame.

After establishing a connection with AP, the mobile host sends an EAP_START message to AP; when receiving the message, AP sends an EAP_REQUEST/IDENTITY message to the mobile host to request the user to input user name and password. After the user inputs the user name and password, the mobile host encapsulates them in the EAP_RESPONSE/IDENTITY message and sends the message back to AP. AP encapsulates user name and password provided by the user into an ACCESS_REQUEST message and then sends the message to the authentication server; the communication between AP and the authentication server complies with Radius protocol. The authentication server checks whether the user name and password match first; if not, the authentication server determines the authentication failed and sends an ACCEPT_REJECT message to AP. When receiving the message, AP sends an EAP_FAIL message to the mobile host to reject access of the mobile host. If the authentication succeeds, the authentication server will send an ACCESS_ACCEPT message to AP and add property information P corresponding to the user in the data field of the message. When AP receives the message, as described in above key distributing method, the key can be generated from the property information P with a key generation algorithm and an EAP_SUCCESS message is sent to the mobile host, or the key can be encrypted with the property information P and then sent to the mobile host in an EAP_KEY message. Accordingly, the mobile host can generate the key from the stored property information P with the same key generation algorithm or decrypts the received key with the corresponding property information P. Next, the mobile host encrypts MAC frame data with the key and then sends the encrypted MAC frame data to AP; at the same time, it adds the encryption identifier in the MAC frames. Field of the frame body comprises IV field, data field and ICV field; especially, the IV field contains a 2-bit KeyID field, which serves as the synchronization flag. Preferably, when the MAC frames are not encrypted, KeyID=0; after the encryption communication starts, KeyID is increased by 1 whenever the key is updated, i.e., KeyID=KeyID+1; when KeyID=3, it will be reset to 1 instead of 0 during the next key update operation. Therefore, when the MAC data is encrypted at the first time, the field KeyID=1 in the MAC frames sent by the mobile host; when receiving the MAC frames with KeyID=1, AP determines the mobile host has used a new key and then decrypts MAC data with said generated key, converts the MAC data into Ethernet format to forwards to the wired network. If detecting the KeyID in MAC frames uploaded by the mobile host is still 0 after sending the EAP_KEY message, AP will resend the EAP_SUCCESS or EAP_KEY message.

In order to update the communication key dynamically, after the mobile host logs on, AP may send the EAP_KEY message periodically (e.g., once every 10 minutes) or aperiodically to inform the mobile host to update the key. In the latest EAP_KEY message, the random number used to generate the new key or the new key encrypted with the present key may be included selectively. When receiving the message, the mobile host can generate the new key from the random number with the same key generation algorithm or decrypts the new key with the present key. Next, the mobile host encrypts MAC data with the new key and set KeyID=2 at the same time. AP detects the KeyID field in MAC frames uploaded; if the KeyID is not changed, it continues using the present key to decrypt the MAC data and resends the EAP_KEY message at the same time; if the KeyID has been changed, it will use the new key to decrypt the MAC data.

## Claims

1. A method for distributing encryption keys in WLAN, said WLAN comprising an access point (AP11, AP21, AP31) and a plurality of mobile hosts (MH12, M13, MH22, M23, M32, M33) storing identification information and corresponding property information, said mobile hosts (MH12, M13, MH22, M23, M32, M33) communicating with said access point (AP11, AP21, AP31) through wireless channels, said access point (AP11, AP21, AP31) and an external network (4) connecting with an authentication device which authenticates said mobile hosts (MH12, M13, MH22, M23, M32, M33); said authentication device storing identification information of all mobile hosts (MH12, M13, MH22, M23, M32, M33), said method comprising the following steps:
(1) a mobile host (MH21) sending an authentication request containing identification information to the authentication device for identity authentication;
(2) the authentication device authenticating the mobile host (MH21) according to identification information contained in the authentication request, if the authentication fails, the authentication device sending an ACCEPT_REJECT message to the mobile host (MH21) via the access point (AP21); if the authentication succeeds, the authentication device sending key-related information M1 comprising corresponding property information searched by said authentication device according to the identification information contained in the authentication request, or a key generated from said corresponding property information by said authentication device with a key generation algorithm, to the access point (AP21) and sending an ACCESS_ACCEPT message to the mobile host (MH21) via the access point (AP21);
(3) the access point (AP21) obtaining a key, usable for decryption in packets communication between the mobile host (MH21) and the access point (AP21), from the key-related information M1 sent from the authentication device, and the mobile host (MH21) obtaining the key upon receipt of said ACCESS_ACCEPT message by generating a key from the stored corresponding property information or by decrypting an encrypted key encrypted by and sent from the authentication device or the access point (AP21) using said property information, with the encrypted key being encrypted with said property information.

2. A method for distributing encryption keys in WLAN according to claim 1, wherein in the case that the information M1 is the corresponding property information searched by said authentication device according to the identification information contained in the authentication request, said access point (AP21) obtains the key through generating it from said property information with a key generation algorithm; whereas said mobile host (MH21) obtains the key through generating it from property information stored in itself with the same key generation algorithm after said mobile host (MH21) receives said ACCESS_ACCEPT message forwarded by the access point (AP21).

3. A method for distributing encryption keys in WLAN according to claim 1, wherein in the case that the information M1 is the corresponding property information searched by said authentication device according to the identification information contained in the authentication request, said access point (AP21) obtains the key through generating it with a key generation algorithm; the method further comprises the access point (AP21) encrypting the key with said property information and then sending the encrypted key to said mobile host (MH21), wherein said mobile host (MH21) obtains the key through decrypting the encrypted key with said property information.

4. A method for distributing encryption keys in WLAN according to claim 1, wherein in the case that the information M1 is the key generated from said corresponding property information by said authentication device with a key generation algorithm, said mobile host (MH21) obtains the key through generating it from said property information stored in itself with the same key generation algorithm after receiving said ACCESS_ACCEPT message.

5. A method for distributing encryption keys in WLAN according to claim 1, wherein in the case that the information M1 is the key generated from said corresponding property information by said authentication device with a key generation algorithm, the method further comprises encrypting the key with said property information and then sending the encrypted key to said mobile host (MH21), wherein said mobile host (MH21) obtains the key through decrypting the encrypted key with the property information stored in itself after receiving said ACCESS_ACCEPT message.

6. A method for distributing encryption keys in WLAN according to any of claim 1 to 5, wherein when receiving data packets encrypted with the key sent from said mobile host (MH21), said access point (AP21) updates the key periodically or aperiodically through the following steps of:
(a1) said access point (AP21) generating a random number and generating a new key from said random number with any key generation algorithm;
(b1) said access point (AP21) adding said random number to a key update message and then sending the message to said mobile host (MH21);
(c1) when receiving said key update message, said mobile host (MH21) generating the new key from said random number contained in said key update message with the same key generation algorithm as that in step (a1);
(d1) said mobile host (MH21) encrypting data packets to be sent to the access point (AP21) with said new key and then sending the encrypted data packets to the access point (AP21), during the encryption process, said mobile host (MH21) adding an encryption identifier to said data packets and changing the value of said encryption identifier to indicate the communication key has been changed; and
(e1) when receiving the data packets from said mobile host (MH21), said access point (AP21) determines whether to change the key according to value of said encryption identifier.

7. A method for distributing encryption keys in WLAN according to any of claim 1 to 5, wherein in order to achieve encryption communication with the new key, when receiving data packets encrypted with the key sent from said mobile host (MH21), said access point (AP21) updates the key periodically or aperiodically through the following steps of:
(a2) said access point (AP21) generating a new key in any way and encrypting said new key with the present key;
(b2) said access point (AP21) adding the encrypted key to a key update message and then sending said message to said mobile host (MH21);
(c2) when receiving said key update message, said mobile host (MH21) decrypting the new key contained in said key update message with the present key so as to obtain said new key;
(d2) said mobile host (MH21) encrypting data packets to be sent to the access point (AP21) with said new key and then sending the encrypted data packets to the access point (AP21), during the encryption process, said mobile host (MH21) adding an encryption identifier to said data packets and changing the value of said encryption identifier to indicate the communication key has been changed; and
(e2) when receiving the data packets from said mobile host (MH21), said access point (AP21) determines whether to change the key according to value of said encryption identifier.

8. A method for distributing encryption keys in WLAN according to any of claim 1 to 5, wherein when receiving data packets encrypted with the key sent from said mobile host (MH21), said access point (AP21) updates the key periodically or aperiodically through the following steps of:
(a3) said authentication device generating a random number which is used to generate a new key with a key generation algorithm, and then said authentication device sending said new key to the access point (AP21), and sending said random number to said mobile host (MH21) via the access point (AP21);
(b3) said access point (AP21) sending a key update message to said mobile host (MH21) after receiving said new key;
(c3) when receiving said random number from said authentication device and said key update message from the access point (AP21), said mobile host (MH21) generating the new key from said random number with the same key generation algorithm as that in step (a3);
(d3) said mobile host (MH21) encrypting data packets to be sent to the access point (AP21) with said new key and then sending the encrypted data packets to the access point (AP21), during the encryption process, said mobile host (MH21) adding an encryption identifier to said data packets and changing the value of said encryption identifier to indicate the communication key has been changed; and
(e3) when receiving the data packets from said mobile host (MH21), said access point (AP21) determines whether to change the key according to value of said encryption identifier.

9. A method for distributing encryption keys in WLAN according to any of claim 1 to 5, wherein in order to achieve encryption communication with a new key, when receiving data packets encrypted with the key sent from said mobile host (MH21), said access point (AP21) updates the key periodically or aperiodically through the following steps of:
(a4) said authentication device generating a new key in any way and encrypting said new key with the present key, then sending said new key to said access point (AP21), whereas sending the encrypted new key to said mobile host (MH21) via said access point (AP21);
(b4) after receiving said new key, said access point (AP21) sending a key update message to said mobile host (MH21)
(c4) when receiving the encrypted key from said authentication device and said key update message from said access point (AP21), said mobile host (MH21) decrypting the encrypted key with the present key to obtain the new key;
(d4) said mobile host (MH21) encrypting data packets to be sent to the access point (AP21) with said new key and then sending the encrypted data packets to the access point (AP21), during the encryption process, said mobile host (MH21) adding an encryption identifier to said data packets and changing the value of said encryption identifier to indicate the communication key has been changed; and
(e4) when receiving the data packets from said mobile host (MH21), said access point (AP21) determines whether to change the key according to value of said encryption identifier.

10. A method for distributing encryption keys in WLAN according to any of claims 1 to 9, wherein said authentication device is an authentication server installed in said external network (4).

11. A method for distributing encryption keys in WLAN according to any of claims 1 to 9, wherein said authentication device is a wireless gateway (51, 52, 53) that connects said access point (AP11, AP21, AP31) with said external network (4)

12. A method for distributing encryption keys in WLAN according to any of claims 1 to 9, wherein said authentication device includes a wireless gateway (51, 52, 53) and an authentication server installed in said external network (4).

## Patentansprüche

1. Verfahren zum Verteilen von Verschlüsselungs-Schlüsseln in einem WLAN, wobei das WLAN einen Zugangspunkt (AP11, AP21, AP31) und eine Vielzahl von mobilen Hosts (MH12, M13, MH22, M23, M32, M33) umfasst, die Identifizierungs-Informationen und entsprechende Eigenschafts-Informationen speichern, wobei die mobilen Hosts (MH12, M13, MH22, M23, M32, M33) mit dem Zugangspunkt (AP11, AP21, AP31) über drahtlose Kanäle kommunizieren, wobei der Zugangspunkt (AP11, AP21, AP31) und ein externes Netzwerk (4) mit einer Authentifizierungs-Vorrichtung verbunden sind, die die mobilen Hosts (MH12, M13, MH22, M23, M32, M33) authentifiziert; wobei die Authentifizierungs-Vorrichtung Identifizierungs-Informationen von allen mobilen Hosts (MH12, M13, MH22, M23, M32, M33) speichert, wobei das Verfahren die folgenden Schritte umfasst:
(1) Ein mobiler Host (MH21) sendet eine Authentifizierungs-Anforderung, die Identifizierungs-Informationen enthält, an die Authentifizierungs-Vorrichtung zur Identitäts-Authentifizierung;
(2) Die Authentifizierungs-Vorrichtung authentifiziert den mobilen Host (MH21) entsprechend der Identifizierungs-Information, die in der Authentifizierungs-Anforderung enthalten ist, wenn die Authentifizierung fehlschlägt, sendet die Authentifizierungs-Vorrichtung über den Zugangspunkt (AP21) eine Nachricht ACCEPT_REJECT an den mobilen Host (MH21); wenn die Authentifizierung erfolgreich ist, sendet die Authentifizierungs-Vorrichtung Schlüssel bezogene Information M1, die entsprechende Eigenschafts-Informationen enthält, die von der Authentifizierungs-Vorrichtung entsprechend der Identifizierungs-Information, die in der Authentifizierungs-Anforderung enthalten ist, gesucht wird, oder einen Schlüssel, der aus den entsprechenden Eigenschafts-Informationen von der Authentifizierungs-Vorrichtung mit einem Schlüssel-Erzeugungs-Algorithmus erzeugt wird, an den Zugangspunkt (AP21) und sendet eine Nachricht ACCESS_ACCEPT über den Zugangspunkt (AP21) an den mobilen Host (MH21);
(3) der Zugangspunkt (AP21) erhält einen Schlüssel, der zur Entschlüsselung bei der Datenpaket-Kommunikation zwischen dem mobilen Host und dem Zugangspunkt benutzt werden kann, aus der Schlüssel bezogenen Information M1, die von der Authentifizierungs-Vorrichtung gesendet wird, und der mobile Host (MH21) erhält den Schlüssel bei Empfang der Nachricht ACCESS_ACCEPT durch Erzeugen eines Schlüssels aus den gespeicherten entsprechenden Eigenschafts-Informationen oder durch Entschlüsseln eines verschlüsselten Schlüssels, der von der Authentifizierungs-Vorrichtung oder dem Zugangspunkt (AP21) unter Verwendung der Eigenschafts-Informationen verschlüsselt und gesendet wurde, wobei der verschlüsselte Schlüssel mit der Eigenschafts-Information verschlüsselt wird.

2. Verfahren zum Verteilen von Verschlüsselungs-Schlüsseln in einem WLAN gemäß Anspruch 1, wobei in dem Fall, dass die Information M1 die entsprechende Eigenschafts-Information ist, die von der Authentifizierungs-Vorrichtung entsprechend der Identifizierungs-Information, die in der Authentifizierungs-Anforderung enthalten ist, gesucht wird, der Zugangspunkt (AP21) den Schlüssel erhält, indem er ihn aus der Eigenschafts-Information mit einem Schlüssel-Erzeugungs-Algorithmus erzeugt; während der mobile Host (MH21) den Schlüssel erhält, indem er ihn mit demselben Schlüssel-Erzeugungs-Algorithmus aus Eigenschafts-Information erzeugt, die in ihm gespeichert ist, nachdem der mobile Host (MH21) die Nachricht ACCESS_ACCEPT empfängt, die vom Zugangspunkt (AP21) weitergeleitet wurde.

3. Verfahren zum Verteilen von Verschlüsselungs-Schlüsseln in einem WLAN gemäß Anspruch 1, wobei in dem Fall, dass die Information M1 die entsprechende Eigenschafts-Information ist, die von der Authentifizierungs-Vorrichtung entsprechend der Identifizierungs-Information, die in der Authentifizierungs-Anforderung enthalten ist, gesucht wird, der Zugangspunkt (AP21) den Schlüssel erhält, indem er ihn mit einem Schlüssel-Erzeugungs-Algorithmus erzeugt; wobei das Verfahren es ferner umfasst, dass der Zugangspunkt (AP21) den Schlüssel mit der Eigenschafts-Information verschlüsselt und den verschlüsselten Schlüssel dann an den mobilen Host (MH21) sendet, wobei der mobile Host (MH21) den Schlüssel durch Entschlüsseln des verschlüsselten Schlüssels mit der Eigenschafts-Information erhält.

4. Verfahren zum Verteilen von Verschlüsselungs-Schlüsseln in einem WLAN gemäß Anspruch 1, wobei in dem Fall, dass die Information M1 der aus der entsprechenden Eigenschafts-Information durch die Authentifizierungs-Vorrichtung mit einem Schlüssel-Erzeugungs-Algorithmus erzeugte Schlüssel ist, der mobile Host (MH21) den Schlüssel erhält, indem er ihn nach Empfang der Nachricht ACCESS_ACCEPT mit demselben Schlüssel-Erzeugungs-Algorithmus aus der Eigenschafts-Information erzeugt, die in ihm selbst gespeichert ist.

5. Verfahren zum Verteilen von Verschlüsselungs-Schlüsseln in einem WLAN gemäß Anspruch 1, wobei in dem Fall, dass die Information M1 der aus der entsprechenden Eigenschafts-Information durch die Authentifizierungs-Vorrichtung mit einem Schlüssel-Erzeugungs-Algorithmus erzeugte Schlüssel ist, das Verfahren es ferner umfasst, den Schlüssel mit der Eigenschafts-Information zu verschlüsseln und den verschlüsselten Schlüssel dann an den mobilen Host (MH21) zu senden, wobei der mobile Host (MH21) den Schlüssel erhält, indem er ihn nach Empfang der Nachricht ACCESS_ACCEPT mit der Eigenschafts-Information entschlüsselt, die in ihm selbst gespeichert ist.

6. Verfahren zum Verteilen von Verschlüsselungs-Schlüsseln in einem WLAN gemäß einem beliebigen der Ansprüche 1 bis 5, wobei wenn er Datenpakete empfängt, die mit dem vom mobilen Host (MH21) gesendeten Schlüssel verschlüsselt sind, der Zugangspunkt (AP21) den Schlüssel regelmäßig oder unregelmäßig durch folgende Schritte aktualisiert:
(a1) der Zugangspunkt (AP21) erzeugt eine Zufallszahl und erzeugt aus der Zufallszahl mit einem beliebigen Algorithmus zur Erzeugung von Schlüsseln einen neuen Schlüssel;
(b1) der Zugangspunkt (AP21) fügt die Zufallszahl zu einer Schlüssel-Aktualisierungs-Nachricht hinzu und sendet die Nachricht dann an den mobilen Host (MH21);
(c1) wenn er die Schlüssel-Aktualisierungs-Nachricht empfängt, erzeugt der mobile Host (MH21) den neuen Schlüssel aus der Zufallszahl, die in der Schlüssel-Aktualisierungs-Nachricht enthalten ist, mit demselben Algorithmus zur Erzeugung von Schlüsseln wie in Schritt (a1);
(d1) der mobile Host (MH21) verschlüsselt Datenpakete, die zum Zugangspunkt (AP21) zu senden sind, mit dem neuen Schlüssel und sendet die verschlüsselten Datenpakete an den Zugangspunkt (AP21), während des Verschlüsselungsprozesses fügt der mobile Host (MH21) eine Verschlüsselungs-Kennung zu den Datenpaketen hinzu und ändert den Wert der Verschlüsselungs-Kennung, um anzuzeigen, dass der Kommunikations-Schlüssel geändert wurde; und
(e1) wenn er die Datenpakete vom mobilen Host (MH21) empfängt, bestimmt der Zugangspunkt (AP21), ob der Schlüssel entsprechend dem Wert der Verschlüsselungs-Kennung zu ändern ist.

7. Verfahren zum Verteilen von Verschlüsselungs-Schlüsseln in einem WLAN gemäß einem beliebigen der Ansprüche 1 bis 5, wobei um eine Verschlüsselungs-Kommunikation mit dem neuen Schlüssel zu erzielen, der Zugangspunkt (AP21), wenn er Datenpakete empfängt, die mit dem vom mobilen Host (MH21) gesendeten Schlüssel verschlüsselt sind, den Schlüssel regelmäßig oder unregelmäßig durch folgende Schritte aktualisiert:
(a2) der Zugangspunkt (AP21) erzeugt einen neuen Schlüssel auf beliebige Art und verschlüsselt den neuen Schlüssel mit dem derzeitigen Schlüssel;
(b2) der Zugangspunkt (AP21) fügt den verschlüsselten Schlüssel zu einer Schlüssel-Aktualisierungs-Nachricht hinzu und sendet die Nachricht dann an den mobilen Host (MH21);
(c2) wenn er die Schlüssel-Aktualisierungs-Nachricht empfängt, entschlüsselt der mobile Host (MH21) den neuen Schlüssel, der in der Schlüssel-Aktualisierungs-Nachricht enthalten ist, mit dem derzeitigen Schlüssel, um den neuen Schlüssel zu erhalten;
(d2) der mobile Host (MH21) verschlüsselt Datenpakete, die zum Zugangspunkt (AP21) zu senden sind, mit dem neuen Schlüssel und sendet die verschlüsselten Datenpakete dann an den Zugangspunkt (AP21), während des Verschlüsselungsprozesses fügt der mobile Host (MH21) eine Verschlüsselungs-Kennung zu den Datenpaketen hinzu und ändert den Wert der Verschlüsselungs-Kennung, um anzuzeigen, dass der Kommunikations-Schlüssel geändert wurde; und
(e2) wenn er die Datenpakete vom mobilen Host (MH21) empfängt, bestimmt der Zugangspunkt (AP21), ob der Schlüssel entsprechend dem Wert der Verschlüsselungs-Kennung zu ändern ist.

8. Verfahren zum Verteilen von Verschlüsselungs-Schlüsseln in einem WLAN gemäß einem beliebigen der Ansprüche 1 bis 5, wobei der Zugangspunkt (AP21), wenn er Datenpakete empfängt, die mit dem vom mobilen Host (MH21) gesendeten Schlüssel verschlüsselt sind, den Schlüssel regelmäßig oder unregelmäßig durch folgende Schritte aktualisiert:
(a3) die Authentifizierungs-Vorrichtung erzeugt eine Zufallszahl, die dazu benutzt wird, mit einem Algorithmus zur Erzeugung von Schlüsseln einen neuen Schlüssel zu erzeugen, und dann sendet die Authentifizierungs-Vorrichtung den neuen Schlüssel zum Zugangspunkt (AP21) und sendet die Zufallszahl über den Zugangspunkt (AP21) zum mobilen Host (MH21);
(b3) der Zugangspunkt (AP21) sendet eine Schlüssel-Aktualisierungs-Nachricht an den mobilen Host (MH21), nachdem er den neuen Schlüssel empfangen hat;
(c3) wenn er die Zufallszahl von der Authentifizierungs-Vorrichtung und die Schlüssel-Aktualisierungs-Nachricht vom Zugangspunkt (AP21) empfängt, erzeugt der mobile Host (MH21) den neuen Schlüssel aus der Zufallszahl mit demselben Algorithmus zur Erzeugung von Schlüsseln wie in Schritt (a3);
(d3) der mobile Host (MH21) verschlüsselt Datenpakete, die zum Zugangspunkt (AP21) zu senden sind, mit dem neuen Schlüssel und sendet die verschlüsselten Datenpakete dann an den Zugangspunkt (AP21), während des Verschlüsselungsprozesses fügt der mobile Host (MH21) eine Verschlüsselungs-Kennung zu den Datenpaketen hinzu und ändert den Wert der Verschlüsselungs-Kennung, um anzuzeigen, dass der Kommunikations-Schlüssel geändert wurde; und
(e3) wenn er die Datenpakete vom mobilen Host (MH21) empfängt, bestimmt der Zugangspunkt (AP21), ob der Schlüssel entsprechend dem Wert der Verschlüsselungs-Kennung zu ändern ist.

9. Verfahren zum Verteilen von Verschlüsselungs-Schlüsseln in einem WLAN gemäß einem beliebigen der Ansprüche 1 bis 5, wobei, um eine Verschlüsselungs-Kommunikation mit einem neuen Schlüssel zu erzielen, der Zugangspunkt (AP21), wenn er Datenpakete empfängt, die mit dem vom mobilen Host (MH21) gesendeten Schlüssel verschlüsselt sind, den Schlüssel regelmäßig oder unregelmäßig durch folgende Schritte aktualisiert:
(a4) die Authentifizierungs-Vorrichtung erzeugt einen neuen Schlüssel auf eine beliebige Art und verschlüsselt den neuen Schlüssel mit dem derzeitigen Schlüssel, sendet den neuen Schlüssel dann zum Zugangspunkt (AP21), während der verschlüsselte neue Schlüssel über den Zugangspunkt (AP21) zum mobilen Host (MH21) gesendet wird;
(b4) nachdem er den neuen Schlüssel empfangen hat, sendet der Zugangspunkt (AP21) eine Schlüssel-Aktualisierungs-Nachricht an den mobilen Host (MH21);
(c4) wenn er den verschlüsselten Schlüssel von der Authentifizierungs-Vorrichtung und die Schlüssel-Aktualisierungs-Nachricht vom Zugangspunkt (AP21) empfängt, entschlüsselt der mobile Host (MH21) den verschlüsselten Schlüssel mit dem derzeitigen Schlüssel, um den neuen Schlüssel zu erhalten;
(d4) der mobile Host (MH21) verschlüsselt Datenpakete, die zum Zugangspunkt (AP21) zu senden sind, mit dem neuen Schlüssel und sendet die verschlüsselten Datenpakete dann an den Zugangspunkt (AP21), während des Verschlüsselungsprozesses fügt der mobile Host (MH21) eine Verschlüsselungs-Kennung zu den Datenpaketen hinzu und ändert den Wert der Verschlüsselungs-Kennung, um anzuzeigen, dass der Kommunikations-Schlüssel geändert wurde; und
(e4) wenn er die Datenpakete vom mobilen Host (MH21) empfängt, bestimmt der Zugangspunkt (AP21), ob der Schlüssel entsprechend dem Wert der Verschlüsselungs-Kennung zu ändern ist.

10. Verfahren zum Verteilen von Verschlüsselungs-Schlüsseln in einem WLAN gemäß einem beliebigen der Ansprüche 1 bis 9, wobei die Authentifizierungs-Vorrichtung ein Authentifizierungs-Server ist, der in dem externen Netzwerk (4) installiert ist.

11. Verfahren zum Verteilen von Verschlüsselungs-Schlüsseln in einem WLAN gemäß einem beliebigen der Ansprüche 1 bis 9, wobei die Authentifizierungs-Vorrichtung ein drahtloser Gateway (51, 52, 53) ist, der den Zugangspunkt (AP11, AP21, AP31) mit dem externen Netzwerk (4) verbindet.

12. Verfahren zum Verteilen von Verschlüsselungs-Schlüsseln in einem WLAN gemäß einem beliebigen der Ansprüche 1 bis 9, wobei die Authentifizierungs-Vorrichtung einen drahtlosen Gateway (51, 52, 53) und einen Authentifizierungs-Server enthält, der in dem externen Netzwerk (4) installiert ist.

## Revendications

1. Procédé de distribution de clés de cryptage dans un réseau WLAN, ledit réseau WLAN comprenant un point d'accès (AP11, AP21, AP31) et une pluralité d'hôtes mobiles {MH12, M13, MH22, M23, M32, M33) qui enregistrent des informations d'identification et des informations de propriété correspondantes, lesdits hôtes mobiles (MH12, M13, MH22, M23, M32, M33) communicant avec ledit point d'accès (AP11, AP21, AP31) via des canaux sans fil, ledit point d'accès (AP11, AP21, AP31) et un réseau externe (4) se connectant à un dispositif d'authentification qui authentifie lesdits hôtes mobiles (MH12, M13, MH22, M23, M32, M33), ledit dispositif d'authentification enregistrant des informations d'identification de tous les hôtes mobiles (MH12, M13, MH22, M23, M32, M33), ledit procédé comprenant les étapes suivantes :
(1) envoi par un hôte mobile (MH21) d'une demande d'authentification contenant des informations d'identification à un dispositif d'authentification pour authentification d'identité ;
(2) authentification de l'hôte mobile (MH21) par le dispositif d'authentification en fonction des informations d'identification contenues dans la demande d'authentification ; si l'authentification échoue, envoi par le dispositif d'authentification d'un message ACCEPT_REJECT à l'hôte mobile (MH21) via le point d'accès (AP21); si l'authentification réussit, envoi par le dispositif d'authentification d'informations relatives à une clé (M1), comprenant des informations de propriété correspondantes recherchées par ledit dispositif d'authentification en fonction des informations d'identification contenues dans la demande d'authentification, ou d'une clé générée à partir desdites informations de propriété correspondantes par ledit dispositif d'authentification au moyen d'un algorithme de génération de clé, vers le point d'accès (AP21), et envoi d'un message ACCESS_ACCEPT à l'hôte mobile (MH21) via le point d'accès (AP21) ;
(3) obtention par le point d'accès (AP21) d'une clé, utilisable pour le décryptage lors de la communication de paquets de données entre l'hôte mobile et le point d'accès, à partir des informations (M1) relatives à la clé envoyées par le dispositif d'authentification, et obtention par l'hôte mobile (MH21) de la clé lors de la réception dudit message ACCESS_ACCEPT en générant une clé à partir des informations de propriété enregistrées correspondantes ou en décryptant une clé cryptée et envoyée par le dispositif d'authentification ou par le point d'accès (AP21) en utilisant lesdites informations de propriété, la clé étant cryptée avec lesdites informations de propriété.

2. Procédé de distribution de clés de cryptage dans un réseau WLAN selon la revendication 1 dans lequel, si les informations (M1) sont les informations de propriété correspondantes recherchées par ledit dispositif d'authentification en fonction des informations d'identification contenues dans la demande d'authentification, ledit point d'accès (AP21) obtient la clé en la générant à partir desdites informations de propriété au moyen d'un algorithme de génération de clé ; alors que ledit hôte mobile (MH21) obtient la clé en la générant à partir des informations de propriété qui y sont enregistrées au moyen du même algorithme de génération de clé après que ledit hôte mobile (MH21) aie reçu ledit message ACCESS_ACCEPT transmis par le point d'accès (AP21).

3. Procédé de distribution de clés de cryptage dans un réseau WLAN selon la revendication 1 dans lequel, si les informations (M1) sont les informations de propriété correspondantes recherchées par ledit dispositif d'authentification en fonction des informations d'identification contenues dans la demande d'authentification, ledit point d'accès (AP21) obtient la clé en la générant au moyen d'un algorithme de génération de clé ; le procédé comprenant en outre le cryptage de la clé par le point d'accès (AP21) à partir desdites informations de propriété et ensuite l'envoi de la clé cryptée audit hôte mobile (MH21), dans lequel ledit hôte mobile (MH21) obtient la clé en décryptant la clé cryptée avec lesdites informations de propriété.

4. Procédé de distribution de clés de cryptage dans un réseau WLAN selon la revendication 1 dans lequel, si les informations (M1) sont la clé générée à partir desdites informations de propriété correspondantes par ledit dispositif d'authentification au moyen d'un algorithme de génération de clé, ledit hôte mobile (MH21) obtient la clé en la générant à partir desdites informations de propriété qui y sont enregistrées au moyen du même algorithme de génération de clé après réception dudit message ACCESS_ACCEPT.

5. Procédé de distribution de clés de cryptage dans un réseau WLAN selon la revendication 1 dans lequel, si les informations (M1) sont la clé générée à partir desdites informations de propriété correspondantes par ledit dispositif d'authentification au moyen d'un algorithme de génération de clé, le procédé comprend en outre le cryptage de la clé à partir desdites informations de propriété et ensuite l'envoi de la clé cryptée audit hôte mobile (MH21), dans lequel ledit hôte mobile (MH21) obtient la clé en décryptant la clé cryptée à partir des informations de propriété qui y sont enregistrées après réception dudit message ACCESS_ACCEPT.

6. Procédé de distribution de clés de cryptage dans un réseau WLAN selon l'une quelconque des revendications 1 à 5 dans lequel, lors de la réception de paquets de données cryptés avec la clé envoyée par ledit hôte mobile (MH21), ledit point d'accès (AP21) met à jour la clé de façon périodique ou non en exécutant les étapes suivantes :
(a1) génération par ledit point d'accès (AP21) d'un nombre aléatoire et d'une nouvelle clé à partir dudit nombre aléatoire au moyen d'un algorithme quelconque de génération de clé ;
(b1) ajout par ledit point d'accès (AP21) dudit nombre aléatoire à un message de mise à jour de clé et ensuite envoi du message audit hôte mobile (MH21) ;
(c1) lors de la réception dudit message de mise à jour de clé, génération par ledit hôte mobile (MH21) d'une nouvelle clé à partir dudit nombre aléatoire contenu dans ledit message de mise à jour de clé au moyen du même algorithme de génération de clé que celui de l'étape (a1) ;
(d1) cryptage par ledit hôte mobile (MH21) de paquets de données à envoyer au point d'accès (AP21) avec ladite nouvelle clé et ensuite envoi des paquets de données cryptés au point d'accès (AP21), ledit hôte mobile (MH21) ajoutant au cours du processus de cryptage un identificateur de cryptage auxdits paquets de données et modifiant la valeur dudit identificateur de cryptage pour indiquer que la clé de communication a été modifiée ; et
(e1) lors de la réception de paquets de données dudit hôte mobile (MH21), détermination par ledit point d'accès (AP21) de la modification ou non de la clé en fonction de la valeur dudit identificateur de cryptage.

7. Procédé de distribution de clés de cryptage dans un réseau WLAN selon l'une quelconque des revendications 1 à 5 dans lequel, pour effectuer une communication de cryptage au moyen de la nouvelle clé, lors de la réception de paquets de données cryptés avec la clé envoyée par ledit hôte mobile (MH21), ledit point d'accès (AP21) met à jour la clé de façon périodique ou non en exécutant les étapes suivantes :
(a2) génération par ledit point d'accès (AP21) d'une nouvelle clé d'une façon quelconque et cryptage de ladite nouvelle clé au moyen de la clé actuelle ;
(b2) ajout par ledit point d'accès (AP21) de la clé cryptée à un message de mise à jour de clé et ensuite envoi dudit message audit hôte mobile (MH21) ;
(c2) lors de la réception dudit message de mise à jour de clé, décryptage par ledit hôte mobile (MH21) de la nouvelle clé contenue dans ledit message de mise à jour de clé avec la clé actuelle de manière à obtenir ladite nouvelle clé ;
(d2) cryptage par ledit hôte mobile (MH21) des paquets de données à envoyer au point d'accès (AP21) avec ladite nouvelle clé et ensuite envoi des paquets de données cryptés au point d'accès (AP21), cela au cours du processus de cryptage, ledit hôte mobile (MH21) ajoutant un identificateur de cryptage auxdits paquets de données et modifiant la valeur dudit identificateur de cryptage pour indiquer que la clé de communication a été modifiée ; et
(e2) lors de la réception de paquets de données dudit hôte mobile (MH21), détermination par ledit point d'accès (AP21) de la modification ou non de la clé en fonction de la valeur dudit identificateur de cryptage.

8. Procédé de distribution de clés de cryptage dans un réseau WLAN selon l'une quelconque des revendications 1 à 5 dans lequel, lors de la réception de paquets de données cryptés avec la clé envoyée par ledit hôte mobile (MH21), ledit point d'accès (AP21) met à jour la clé de façon périodique ou non en exécutant les étapes suivantes :
(a3) génération par ledit dispositif d'authentification d'un nombre aléatoire utilisé pour générer une nouvelle clé au moyen d'un algorithme de génération de clé, puis envoi par ledit dispositif d'authentification de ladite nouvelle clé au point d'accès (AP21), et envoi dudit nombre aléatoire audit hôte mobile (MH21) via le point d'accès (AP21) ;
(b3) envoi par ledit point d'accès (AP21) d'un message de mise à jour de clé audit hôte mobile (MH21) après réception de ladite nouvelle clé ;
(c3) lors de la réception dudit nombre aléatoire provenant dudit dispositif d'authentification et dudit message de mise à jour de clé provenant du point d'accès (AP21), génération par ledit hôte mobile (MH21) de la nouvelle clé à partir dudit nombre aléatoire au moyen du même algorithme de génération de clé que celui de l'étape (a3) ;
(d3) cryptage par ledit hôte mobile (MH21) de paquets de données à envoyer au point d'accès (AP21) avec ladite nouvelle clé et ensuite envoi des paquets de données cryptés au point d'accès (AP21), cela au cours du processus de cryptage, ledit hôte mobile (MH21) ajoutant un identificateur de cryptage auxdits paquets de données et modifiant la valeur dudit identificateur de cryptage pour indiquer que la clé de communication a été modifiée ; et
(e3) lors de la réception des paquets de données dudit hôte mobile (MH21), détermination par ledit point d'accès (AP21) de la modification ou non de la clé en fonction de la valeur dudit identificateur de cryptage.

9. Procédé de distribution de clés de cryptage dans un réseau WLAN selon l'une quelconque des revendications 1 à 5 dans lequel, pour effectuer une communication de cryptage avec une nouvelle clé, lors de la réception de paquets de données cryptés avec la clé envoyée par ledit hôte mobile (MH21), ledit point d'accès (AP21) met à jour la clé de façon périodique ou non en exécutant les étapes suivantes :
(a4) génération par ledit dispositif d'authentification d'une nouvelle clé d'une façon quelconque, cryptage de ladite nouvelle clé au moyen de la clé actuelle, puis envoi de ladite nouvelle clé audit point d'accès (AP21), alors que la nouvelle clé cryptée est envoyée audit hôte mobile (MH21) via ledit point d'accès (AP21) ;
(b4) après réception de ladite nouvelle clé, envoi par ledit point d'accès (AP21) d'un message de mise à jour de clé audit hôte mobile (MH21) ;
(c4) lors de la réception de la clé cryptée provenant dudit dispositif d'authentification et dudit message de mise à jour de clé provenant dudit point d'accès (AP21), décryptage par ledit hôte mobile (MH21) de la clé cryptée avec la clé actuelle de manière à obtenir la nouvelle clé ;
(d4) cryptage par ledit hôte mobile (MH21) de paquets de données à envoyer au point d'accès (AP21) avec ladite nouvelle clé et ensuite envoi des paquets de données cryptés au point d'accès (AP21), ledit hôte mobile (MH21) ajoutant au cours du processus de cryptage un identificateur de cryptage auxdits paquets de données et modifiant la valeur dudit identificateur de cryptage pour indiquer que la clé de communication a été modifiée ; et
(e4) lors de la réception de paquets de données dudit hôte mobile (MH21), détermination par ledit point d'accès (AP21) de la modification ou non de la clé en fonction de la valeur dudit identificateur de cryptage.

10. Procédé de distribution de clés de cryptage dans un réseau WLAN selon l'une quelconque des revendications 1 à 9 dans lequel ledit dispositif d'authentification est un serveur d'authentification installé dans ledit réseau externe (4).

11. Procédé de distribution de clés de cryptage dans un réseau WLAN selon l'une quelconque des revendications 1 à 9 dans lequel ledit dispositif d'authentification est une passerelle sans fil (51, 52, 53) qui connecte ledit point d'accès (AP11, AP21, AP31) audit réseau externe (4).

12. Procédé de distribution de clés de cryptage dans un réseau WLAN selon l'une quelconque des revendications 1 à 9 dans lequel ledit dispositif d'authentification comporte une passerelle sans fil (51, 52, 53) et un serveur d'authentification installé dans ledit réseau externe (4).
